# EUROPEAN PATENT SPECIFICATION

(11) **EP 2 762 986 B1**
(45) Date of publication and mention of the grant of the patent: **08.05.2019**
(21) Application number: 14152588.1
(22) Date of filing: 27.01.2014
(51) Int. Cl.: G05B 19/401, B24B 5/04, B24B 5/42, B24B 49/04, B24B 49/02, G04F 7/00

(54) **Measuring method and grinding machine**
Messverfahren und Schleifmaschine
Procédé de mesure et broyeuse

(30) Priority: 30.01.2013 JP 2013015276
(43) Date of publication of application: 06.08.2014
(73) Proprietor: JTEKT Corporation, Osaka-shi Osaka 542-8502 (JP)
(72) Inventor: Tanaka, Okitsugu, Osaka-shi, Osaka 542-8502 (JP); Murakoshi, Yutaka, Osaka-shi, Osaka 542-8502 (JP)
(74) Representative: TBK

(56) References cited:
- US-B1- 6 415 200

## Description

### BACKGROUND OF THE INVENTION

### 1. Field of the Invention

The invention relates to a measuring method and a grinding machine.

### 2. Description of the Related Art

In a grinding process, the diameter of a workpiece is measured by a sizing device during grinding in order to obtain a desired diameter, and the grinding is stopped when the diameter of the workpiece reaches a target value. In order to maintain the accuracy of measurement by the sizing device at a high level, it is necessary to start the measurement after settlement of variations (drift) in the measured value during activation of the sizing device, the variations being due to heating caused by energization of the sizing device. Therefore, a long warm-up time is required during activation of the sizing device. In order to shorten the warm-up time by attenuating the impact of heat, in some sizing devices including a differential transformer, coils and components, which constitute the differential transformer, are made of special materials. Refer to, for example, JP H09 113203 A. However, even if the sizing device is made of special materials, it is difficult to completely eliminate the impact of heat. Further, using the special materials increases the cost for manufacturing the sizing device.

US 6 415 200 B1 discloses an automatic sizing device of a honing machine. The automatic sizing device monitors an output voltage of an in-process measuring head to thereby monitor an inside diameter of a cylinder bore of a workpiece under honing, and applies a control signal to a drive device of a honing head of the working machine, so as to terminate the honing operation of the honing head when the output voltage of the measuring head becomes equal to a reference value, that is, when the inside diameter measured by the measuring head coincides with a nominal value. The automatic sizing device measures the inside diameter by a measuring method as specified in the preamble of claims 1 and 2.

### SUMMARY OF THE INVENTION

One object of the invention is to provide a measuring method and a grinding machine that allow even a commonly-used measuring device to achieve a desired measurement accuracy without the need for warm-up or with a short warm-up time.

In a measuring method according to a first aspect of the invention, a physical quantity is measured by a measuring device as specified in claim 1.

According to the measuring method in the first aspect, the ratio of the activated time of the measuring device to the process time of the main process is reduced. Therefore, it is possible to provide the measuring method that reduces the drift of the measured value obtained by the measuring device. In addition, according to the measuring method in the first aspect, the drift is equal to or smaller than a desired value and therefore measurement is carried out with a high degree of accuracy even if the warm-up time of the measuring device is shortened.

In a measuring method according to a second aspect of the invention, a physical quantity is measured by a measuring device as specified in claim 2.

A grinding machine according to a third aspect of the invention includes the features set forth in claim 7. With the grinding machine according to the third aspect, it is possible to grind the workpiece with a desired dimensional accuracy, even if the warm-up time of the sizing device is shortened.

A grinding machine according to a fourth aspect of the invention includes the features set forth in claim 8.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a plan view illustrating the overall configuration of a grinding machine according to embodiments of the invention;
FIG. 2 is a graph illustrating drifts in a measuring device;
FIG. 3 is a graph illustrating fluctuations in the drift when the measuring device is activated and then deactivated;
FIG. 4 is a graph illustrating fluctuations in the drift in a first embodiment of the invention;
FIG. 5 is a graph illustrating the relationship between the activated time and the deactivated time in a second embodiment of the invention;
FIG. 6 is a graph illustrating fluctuations in the drift in the second embodiment;
FIG. 7 is a graph illustrating a method of obtaining a correction value in a third embodiment of the invention;
FIG. 8 is a graph illustrating a grinding process in a fourth embodiment of the invention;
FIG. 9 is a flowchart illustrating the grinding process in the fourth embodiment; and
FIG. 10 is a block diagram illustrating control in a modified example of the embodiments.

### DETAILED DESCRIPTION OF EMBODIMENTS

First, characteristics regarding the accuracy of measurement by a commonly-used measuring device during activation will be described. When the measuring device is activated, components of the measuring device are energized and the temperatures of the components are increased due to heating by electric resistances. The output characteristics of the measuring device vary as the temperatures of the components increase. As a result, the measured value varies with the lapse of time after the activation of the measuring device. The variations are usually referred to as "drift".

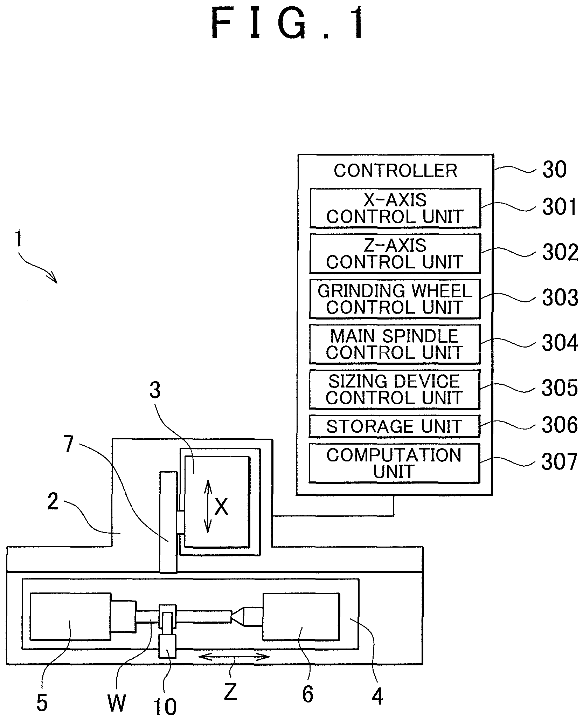

An embodiment of the invention will be described based on an example in which the diameter of a workpiece is measured by a sizing device that serves as a measuring device in a grinding machine. As illustrated in FIG. 1, a grinding machine 1 includes a bed 2, and a grinding head 3 (radial feed device) and a table 4 that are arranged on the bed 2. The grinding head 3 is able to reciprocate in an X-axis direction, and the table 4 is able to reciprocate in a Z-axis direction orthogonal to the X-axis direction. The grinding head 3 supports a grinding wheel 7 such that the grinding wheel 7 is rotatable, and is provided with a wheel spindle motor (not illustrated) that rotates the grinding wheel 7. A main spindle 5 and a tailstock 6 are arranged on the table 4. The main spindle 5 holds and supports one end of a workpiece W such that the workpiece W is rotatable, and the main spindle 5 is driven to be rotated by a main spindle motor (not illustrated). The tailstock 6 supports the other end of the workpiece W such that the workpiece W is rotatable. The workpiece W is supported by the main spindle 5 and the tailstock 6, and is driven to be rotated during grinding. A sizing device 10 that measures the diameter of the workpiece W is arranged on the table 4 at such a position that the sizing device 10 is opposed to the grinding wheel 7 across the workpiece W.

The grinding machine 1 is provided with a controller 30. The controller 30 includes, as functional units, an X-axis control unit 301 that controls the feed of the grinding head 3, a Z-axis control unit 302 that controls the feed of the table 4, a grinding wheel control unit 303 that controls the rotation of the grinding wheel 7, a main spindle control unit 304 that controls the rotation of the main spindle 5, a sizing device control unit 305 that controls the sizing device 10, a storage unit 306 that stores programs and data, and a computation unit 307 that executes various computations.

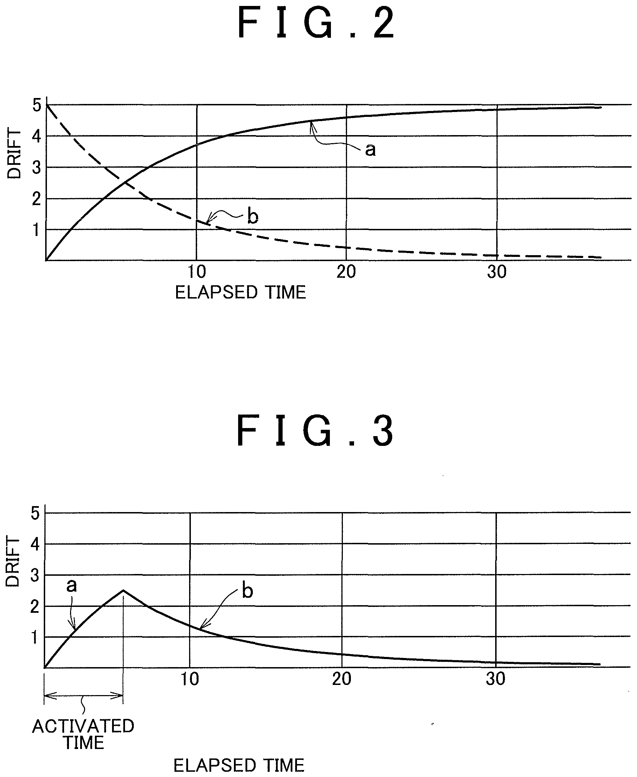

FIG. 2 illustrates drift characteristics that are obtained when the diameter of the same portion of the workpiece W is measured by the sizing device 10 continuously for a certain time. The sizing device 10 continuously measures the same diameter, which does not vary, with a prescribed measurement sampling period. The measured value is supposed to be a constant value (because FIG. 2 is used to obtain the drift characteristics, each curve exhibits a value obtained by subtracting the diameter from the actually measured value. Therefore, the constant value is supposed to be zero). However, in actuality, the measured value varies in a curve under the influence of the drift. A curve a exhibits the drift that indicates temporal variations of the measured value after the sizing device 10 is activated and energized, and that is referred to as "activation drift". The activation drift becomes larger with the lapse of time. The rate of increase in the activation drift is decreased with the lapse of time, and the measured value is saturated at a substantially constant value after the lapse of a certain time. The sizing device 10 is deactivated with the measured value saturated, and the sizing device 10 is then activated for a short time to carry out measurement after the lapse of a certain time. If the activation and deactivation of the sizing device 10 is repeated while the lapse time is changed, "deactivation drift" indicated by a curve b in FIG. 2 is obtained. The deactivation drift b is a curve having a shape obtained by vertically inverting the curve a.

If the sizing device 10 is deactivated after being activated for a certain time, the drift characteristics illustrated in FIG. 3 are obtained, that is, the measured value obtained by the sizing device 10 varies so as to be increased as indicated by the curve a during activation of the sizing device 10, and decreased as indicated by the curve b after the sizing device 10 is deactivated.

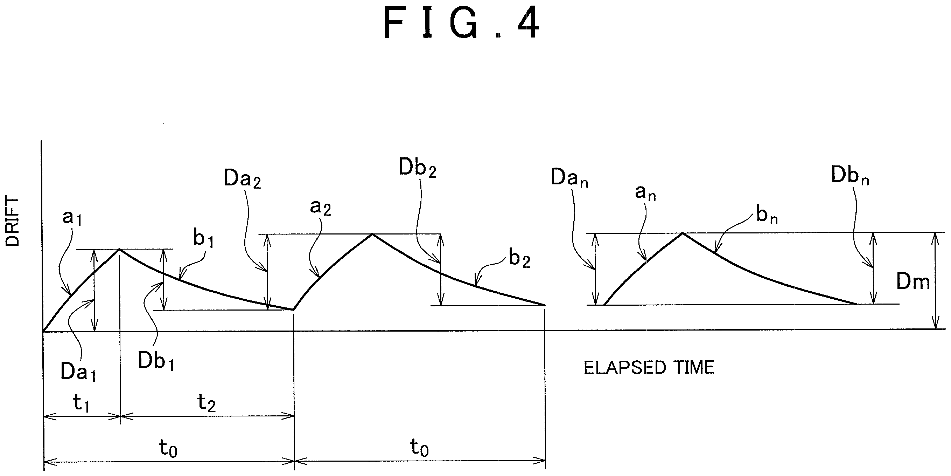

A first embodiment of the invention will be described below. In a measuring method according to the first embodiment, a main process is repeatedly executed with a period of time t₀, which is a duration of the main process, without warming up the sizing device 10. In each main process, the sizing device 10 is activated only for a measurement time t₁ to carry out measurement. In this case, the drift characteristics of the sizing device 10 are as illustrated in FIG. 4. In the first main process, when the sizing device 10 is activated to start the measurement, the measured value is increased as indicated by an activation drift characteristic illustrated by the curve a in FIG. 2, and then reaches a drift Da₁ after the lapse of time t₁. Then, the sizing device 10 is deactivated for a certain time t₂ (= t₀ - t₁). A deactivation drift characteristic of the sizing device 10 is as indicated by the curve b in FIG. 2.

As illustrated in FIG. 2, the curve b of which the start point coincides with the elapsed time on the abscissa axis, which corresponds to the drift Da₁ on the ordinate axis, indicates the deactivation drift characteristic. As indicated by a curve b₁, which is a curve extending through a section from the start point to a time point at which the certain time t₂ has elapsed since the start point, the drift is decreased. An amount of decrease in the drift is Db₁.

In the next main process, when the sizing device 10 is activated for the time t₁, the drift is increased as indicated by a curve a₂ of which the start point coincides with the elapsed time on the abscissa axis, which corresponds to a drift Da₁ - Db₁ on the ordinate axis. An amount of increase in the drift is Da₂. Next, when the sizing device 10 is deactivated for the time t₂, the drift is decreased as indicated by a curve b₂ of which the start point coincides with the elapsed time on the abscissa axis, which corresponds to a drift Da₁ + Da₂ - Db₁ on the ordinate axis. An amount of decrease in the drift is Db₂. Because the curve a is a curve with an increasing rate that gradually decreases with the lapse of time, the drift Da₁ is larger than the drift Da₂ (Da₁ > Da₂). Because the curve b is a curve with a decreasing rate that gradually decreases with the lapse of time, the drift Db₁ is smaller than the drift Db₂ (Db₁ < Db₂).

FIG. 4 illustrates fluctuations in the drift characteristics when the main process is repeated twice. As is understood from FIG. 2, the absolute value of Da₁ is larger than the absolute value of Db₁. If the main process is repeated n times, the absolute value of a drift Daₙ expressed by a curve aₙ becomes substantially equal to the absolute value of a drift Dbₙ expressed by a curve bₙ. That is, n represents the number of times at which the drift varies within a certain range. At this time, a cumulative value Dm of the drifts is expressed by Dm = Da₁ + Da₂ +... + Daₙ - Db₁- Db₂ - ... - Db(n-1). The value of Dm is small if the cumulative value obtained by cumulating the values from Da₁ to Daₙ is small and the cumulative value obtained by cumulating the values from Db₁ to Db(n-1) is large. If the time t₁ of measurement by the sizing device 10 is set short while the deactivated time t₂ is set long, the absolute value of Da₁ becomes smaller but the absolute value of Db₁ becomes larger. As a result, the cumulative value Dm of the drifts becomes smaller. At this time, an error of measurement by the sizing device 10 is smaller than or equal to the cumulative value Dm of the drifts. Therefore, by setting the measurement time t₁ and the deactivated time t₂ such that the cumulative value Dm falls within an allowable measurement error range, it is possible to achieve a prescribed degree of accuracy in the measurements up to n times even without warming up the sizing device 10.

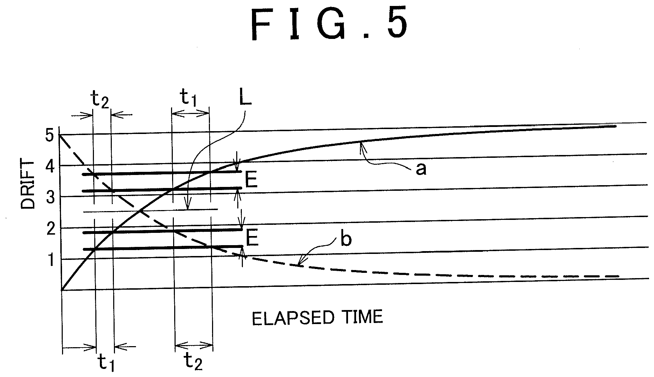

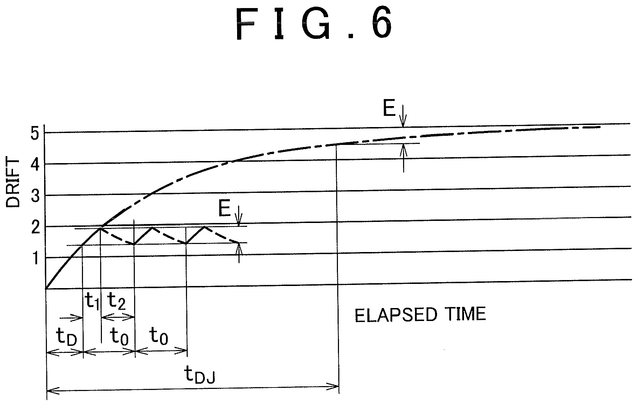

A second embodiment of the invention will be described below. In a measuring method in the second embodiment, the sizing device 10 is warmed up for a certain time, and in the main process repeated with a period of time t₀, the sizing device 10 is activated only for a measurement time t₁ to carry out measurement. The concept of setting the time of warm-up will be described with reference to FIG. 5 and FIG. 6. In FIG. 5, a solid line indicates the curve a that represents the activation drift, a dotted line indicates the curve b that represents the deactivation drift, and the curve a and the curve b are superimposed on each other in the same graph. In the drawings, t₀ denotes a process time of the main process, t₁ denotes a time of measurement by the sizing device 10, t₂ (= t₀ - t₁) denotes a deactivated time of the sizing device 10, and E denotes an allowable measurement error that is the maximum drift acceptable to the sizing device 10.

First, a range in which the fluctuation of the drift becomes the allowable measurement error E is determined. Specifically, as illustrated in FIG. 5, two horizontal parallel lines with an interval that is equal to the width of the allowable measurement error E are set. The measurement time t₁ is set to a time between two points at which the curve a intersects with the parallel lines. The deactivated time t₂ is set to a time between two points at which the curve b intersects with the parallel lines. The vertical positions of the two parallel lines are adjusted such that the sum of the measurement time t₁ and the deactivated time t₂ is equal to the process time t₀. Note that, if a straight line L that passes through the intersection between the curve a and the curve b is located between the two parallel lines, one set of the measurement time t₁ and the deactivated time t₂ is obtained. On the other hand, if the straight line L is not located between the two parallel lines, two sets of the measurement time t₁ and the deactivated time t₂ are obtained. When both the two parallel lines are located below the straight line L, the measurement time t₁ is shorter than the deactivated time t₂. When both the two parallel lines are located above the straight line L, the measurement time t₁ is longer than the deactivated time t₂. When both the two parallel lines are located below the straight line L, whether the measurement time t₁ is longer than an actually required measurement time is determined. When the measurement time t₁ is longer than the actually required measurement time, this set of the measurement time t₁ and the deactivated time t₂ is employed. When the measurement time t₁ in a section below the straight line L is shorter than the actually required measurement time, the set of the measurement time t₁ and deactivated time t₂ when both the two parallel lines are located above the straight line L is employed. A warm-up time t_{D} is a time from the origin of the curve a to the start point of the measurement time t₁.

FIG. 6 illustrates fluctuations of the drift when the times are set as described above. By adjusting the length of the warm-up time t_{D} as an initial condition, it is possible to set the process time t₀, which is expressed by the sum of the activated time t₁ and the deactivated time t₂, within a desired time range. Note that the adjustment of the warm-up time t_{D} means the adjustment to the vertical positions of the two parallel lines in FIG. 5. According to the present embodiment, it is possible to carry out measurement with a desired degree of accuracy without limiting the number of times of the measurements to a value equal to or smaller than n as in the first embodiment.

A third embodiment of the invention will be described below. In a measuring method according to the third embodiment, the sizing device 10 is not warmed up, and in the main process in the early stage, in which the drift increases and which is among the main processes repeated with a period of time t₀, the measured value is corrected by a predicted drift, which is computed for each main process. In this way, a desired accuracy of measurement is ensured.

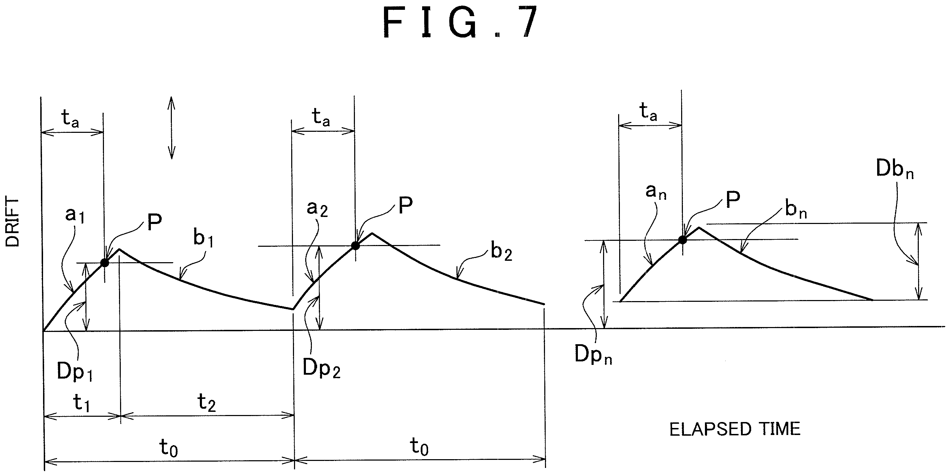

When the main process time t₀ and the measurement time t₁ for the sizing device 10 are set, the deactivated time t₂ (= t₀ - t₁) is automatically set. The predicted drift can be obtained in advance by the following method. When the measurement time t₁ and the deactivated time t₂ are determined, temporal drift fluctuation curves can be obtained, as illustrated in FIG. 7, with the use of the curve a of the activation drift and the curve b of the deactivation drift. In FIG. 7, in the case where the measurement is carried out at a point P that is reached after a time tₛ has elapsed since the sizing device 10 is activated, the predicted drift in a first main process is Dp₁, and the predicted drift in a second main process is denoted by Dp₂. In a similar manner, there are obtained the predicted drifts at the time of measurements in the subsequent main processes up to an n-th main process in which an amount of increase in the drift and an amount of decrease in the drift are equal to each other. The values of the predicted drifts from Dp₁ to Dpₙ are stored in the storage unit 306, as the values of the predicted drifts for the main processes arrayed in time sequence. In each actual main process, the measurement is carried out after the time tₛ has elapsed since the sizing device 10 is activated, and the thus obtained actually measured value is corrected by the predicted drift stored in the storage unit 306 in association with the number of the main process. The thus corrected value is used as the measured value after correction. With this measuring method, it is possible to obtain an accurate measured value without warming up the sizing device 10.

A fourth embodiment of the invention will be described below. In a measuring method according to the fourth embodiment, the sizing device 10 is activated for a plurality of sub-measurement times to carry out the measurement in a grinding process that is repeated with a period of a grinding process time.

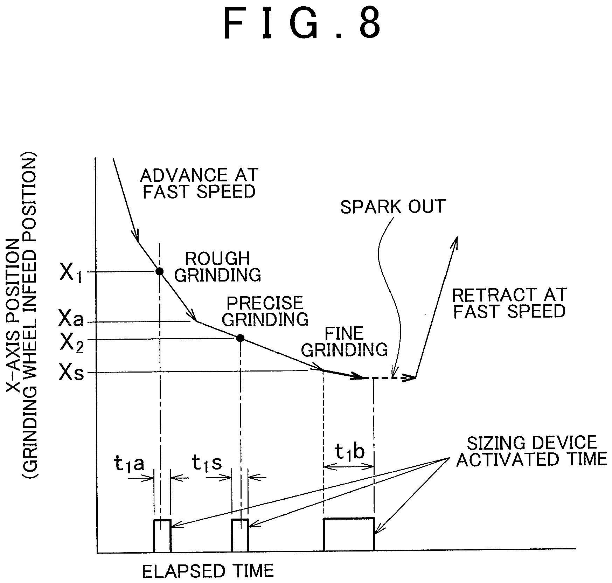

FIG. 8 is a cycle diagram that illustrates X-axis positions (infeed (cutting-in) positions of the grinding wheel 7) in time sequence in the grinding process. The grinding process includes an infeed (cutting-in) step and a spark-out step. The infeed step includes a rough grinding step, a precise grinding step and a fine grinding step in the descending order of feed speed. In the spark-out step, grinding is carried out with the cutting-in stopped in order to enhance the accuracy of roundness. The timing of changeover between the steps is determined on the basis of the diameter of the ground workpiece W. The reason why the values of the X-axis positions, which are the infeed positions of the grinding wheel 7, are not used to determine the timing of changeover between the steps, is that the diameter of the ground workpiece W varies even at the same infeed position due to thermal displacements of various portions of the grinding machine 1 and variation in sharpness of the grinding wheel 7. Conventionally, the sizing device 10 is constantly activated to measure the diameter of the workpiece W, and when the diameter of the workpiece W reaches a prescribed value, the feed speed is changed to make changeover between the steps. In this case, because the sizing device 10 is continuously activated, warm-up of the sizing device 10 is continued until the drift in the initial stage of the activation of the grinding machine becomes constant.

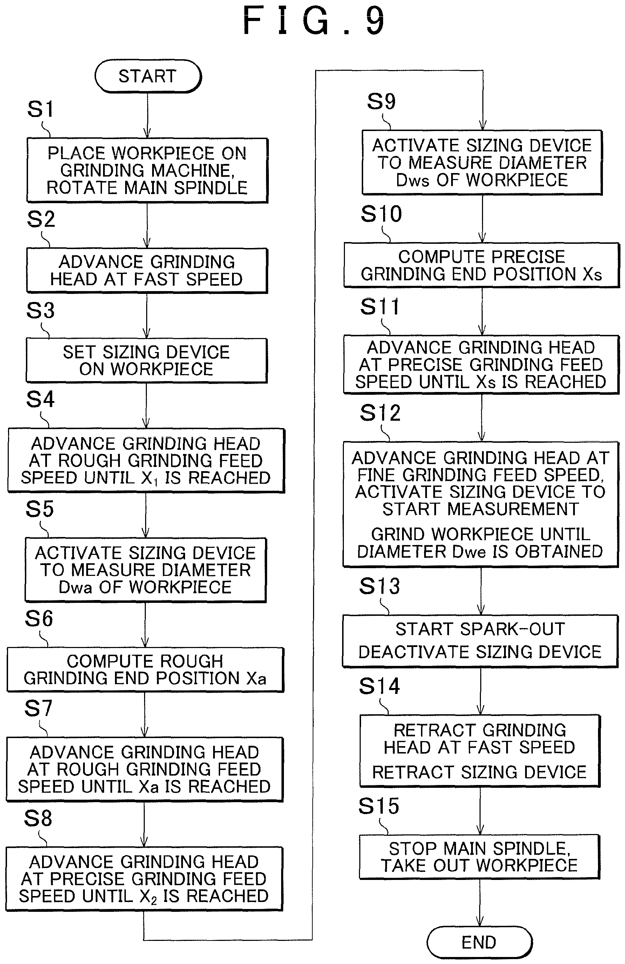

In the present embodiment, in order to shorten the activated time of the sizing device 10 in the grinding process, the sizing device 10 is activated for the short sub-measurement time to measure the diameter of the workpiece W in each of the rough grinding step and the precise grinding step, and the position at which changeover to the next step is made is determined, based on the measured value. A sub-measurement time t₁a in the rough grinding step, a sub-measurement time t₁s in the precise grinding step, a sub-measurement time t₁b in the fine grinding step and various grinding data are stored in the storage unit 306. Note that, the sub-measurement time t₁b in the fine grinding step will be hereinafter referred to as "final measurement time t₁b". The total measurement time t₁ is obtained from the formula, t₁ = t₁a + t₁s + t₁b. The warm-up time t_{D} obtained according to the method described in the second embodiment with the use of the measurement time t₁ is stored in the storage unit 306. Then, after the grinding machine 1 is activated, the grinding wheel 7 is rotated. In addition, after the sizing device 10 is warmed up for the warm-up time t_{D}, the grinding process is carried out. The grinding process will be described below in detail with reference to a flowchart in FIG. 9.

The workpiece W is placed on the grinding machine 1, and then the main spindle 5 is rotated (S1). The grinding head 3 is advanced at a fast feed speed until the grinding wheel 7 approaches the workpiece W (S2). The sizing device 10 is set on a measured portion of the workpiece W (S3). The grinding head 3 is advanced until the grinding wheel 7 reaches an X-axis position X₁ in FIG. 8 at a rough grinding feed speed (S4). The sizing device 10 is activated to measure a diameter Dwa of the workpiece W, and then the sizing device 10 is deactivated. The sub-measurement time in this step is t₁a (S5). A rough grinding end position Xa is computed according to the formula Xa = (Dwar (theoretical rough grinding diameter) - Dwa (actually measured diameter)) / 2 + Xar (theoretical rough grinding end position) by the computation unit 307, and the thus computed value is stored in the storage unit 306 (S6). The grinding head 3 advanced at a rough grinding feed speed until the grinding wheel 7 reaches the position Xa (S7). The grinding head 3 is advanced at a precise grinding feed speed until the grinding wheel 7 reaches an X-axis position X₂ (S8). The sizing device 10 is activated to measure a diameter Dws of the workpiece W, and then the sizing device 10 is deactivated. The sub-measurement time in this step is t₁s (S9). A precise grinding end position Xs is computed by the computation unit 307 according to the formula Xs = (Dwsr (theoretical precise grinding diameter) - Dws (actually measured diameter)) / 2 + Xsr (theoretical precise grinding end position), and the thus computed value is stored in the storage unit 306 (S10). The grinding head 3 is advanced at the precise grinding feed speed until the grinding wheel 7 reaches the position Xs (S11). The grinding head 3 is advanced at a fine grinding feed speed, and the sizing device 10 is activated to continuously measure the diameter of the workpiece W. When the measured value of the diameter of the workpiece W reaches a finished size (Dwe), the advance of the grinding head 3 at the fine grinding feed speed is stopped (S12). The sizing device 10 is deactivated after the final measurement time t₁b has elapsed since the sizing device 10 is activated, and then the spark-out grinding is carried out for a certain time (S13). The grinding head 3 is retracted at a fast feed speed, and the sizing device 10 is also retracted (S14). The main spindle 5 is stopped and the workpiece W is taken out of the grinding machine 1 (S15).

By changing the feed speed during the grinding process according to the above-described method, the measurement time during which the sizing device 10 is activated in the grinding process is shortened. The lower the ratio of the time of measurement by the sizing device 10 to the time of the grinding process is, the shorter the warm-up time is. Therefore, by executing the grinding process as in the present embodiment, it is possible to provide a grinding machine that is able to carry out measurement with a desired degree of accuracy even if the warm-up time is short.

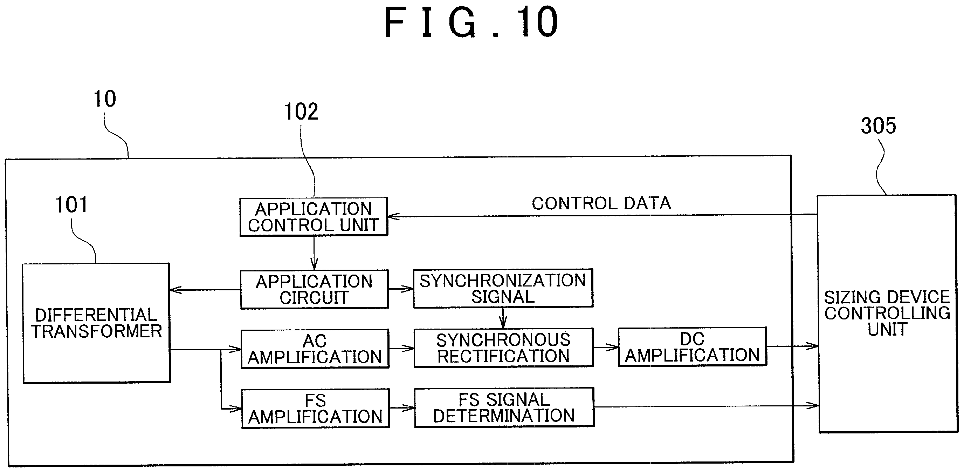

In the embodiments described above, the sizing device 10 is activated and deactivated as a whole. Alternatively, as illustrated in FIG. 10, in a sizing device 10 in which a differential transformer 101 is used, only the differential transformer 101 with a large drift may be activated and deactivated by an application control unit 102. In the above-described grinding process, the rough grinding end position and the precise grinding end position are obtained by the computation. Alternatively, the sizing device may be activated in a time zone around the time at which a prescribed grinding step is estimated to end, and the grinding process may end when an actually measured value of the diameter of the workpiece coincides with the theoretical value.

In a measuring method in which a sizing device (10) is activated only for a prescribed measurement time (t₁) to carry out measurement in a main process that is repeated with a period of a prescribed process time (t₀), there are stored an activation drift that is a drift of a measured value after activation of the sizing device (10) and a deactivation drift that is a fluctuation in drifts among different elapsed times, each of the drift being measured when the sizing device is activated after a predetermined time has elapsed since the sizing device (10) is deactivated. A measurement drift section is determined. In the measurement drift section, the minimum value and the maximum value of the drift in the measurement time (t₁) in the activation drift are equal to the minimum value and the maximum value of the drift within a time (t₂) obtained by subtracting the measurement time (t₁) from the process time (t₀) in the deactivation drift, and the difference between maximum value and the minimum value is equal to or smaller than a prescribed value (E). The sizing device (10) is warmed up for a time (t_{D}) corresponding to a time from activation in the activation drift to the time at which the measurement drift section starts, and then the main process is started.

## Claims

1. A measuring method wherein:
a physical quantity is measured by a measuring device in a main process that is repeated with a period of a process time t₀ having a prescribed length,
the measuring device is activated only for a measurement time t₁ that is shorter than the process time t₀ to measure the physical quantity and is deactivated during a deactivated time t₂ in the main process,
a relationship among t₀, t₁, t₂ is expressed by a formula, t₀ = t₁ + t₂,
a temporal variation in a measured value of the physical quantity measured by the measuring device is a drift, a temporal variation in the measured value after activation of the measuring device is an activation drift, and a temporal variation in the measured value after deactivation of the measuring device is a deactivation drift,
the measuring method is executed using
a graph a indicating an activation drift characteristic of the measuring device,
a graph b indicating a deactivation drift characteristic of the measuring device, and
a prescribed allowable measurement error (E), and
the measuring method includes
a step of determining a section in which the activation drift is equal to or smaller than the allowable measurement error (E) within a range of the measurement time t₁, from the graph a,
a step of determining a section in which the deactivation drift is equal to or smaller than the allowable measurement error (E) within a range of the deactivation time t₂, from the graph b, and
a step of adjusting a warm-up time (t_{D}) from activation of the measuring device to start of measurement so that the process time t₀ that is expressed by t₁ + t₂ becomes equal to a prescribed value.

2. A measuring method wherein:
a physical quantity is measured by a measuring device in a main process that is repeated with a period of a process time t₀ having a prescribed length,
the measuring device is activated only for a measurement time t₁ that is shorter than the process time t₀ to measure the physical quantity and is deactivated during a deactivated time t₂ in the main process,
a relationship among t₀, t₁, t₂ is expressed by a formula, t₀ = t₁ + t₂,
a temporal variation in a measured value of the physical quantity measured by the measuring device is a drift, a temporal variation in the measured value after activation of the measuring device is an activation drift, and a temporal variation in the measured value after deactivation of the measuring device is a deactivation drift,
in the measuring method,
a drift value for each of the main processes is predicted with use of synthesized drift characteristics formed by combining a plurality of drift characteristics corresponding to a plurality of the main processes, each of the drift characteristics corresponding to the main process of one period and being formed of a combination of a graph a indicating an activation drift characteristic of the measuring device and a graph b indicating a deactivation drift characteristic of the measuring device, and
an actually measured value is corrected by a correction value that is the predicted drift value.

3. The measuring method according to claim 1, wherein:
the measuring device is activated only for a plurality of sub-measurement times (t₁a, t₁s, t₁b) in the main process; and
the measurement time t₁ is a sum of the plurality of the sub-measurement times (t₁a, t₁s, t₁b).

4. The measuring method according to claim 2, wherein:
the measuring device is activated only for a plurality of sub-measurement times (t₁a, t₁s, t₁b) in the main process; and
the measurement time t₁ is a sum of the plurality of the sub-measurement times (t₁a, t₁s, t₁b).

5. The measuring method according to claim 3, wherein:
the main process is a grinding process;
the measuring device is a sizing device (10); and
the physical quantity is a size of a workpiece (W).

6. The measuring method according to claim 4, wherein:
the main process is a grinding process;
the measuring device is a sizing device (10); and
the physical quantity is a size of a workpiece (W).

7. A grinding machine (1) comprising:
a grinding wheel (7);
a feed device (3) that feeds the grinding wheel (7) relative to a workpiece (W) so that the grinding wheel (7) cuts into the workpiece (W);
a sizing device (10) that measures a size of the workpiece (W); and
a controller (30) that warms up the sizing device (10) for a prescribed warm-up time (t_{D}), and then repeatedly executes a grinding process having a prescribed grinding process time and including a plurality of infeed steps that vary in a feed speed at which the grinding wheel (7) is fed relative to the workpiece (W),
wherein the controller (30) controls the feed device (3) and the sizing device (10) so that
in the grinding process, each of the infeed steps ends at an infeed position that is computed based on a measured value obtained by measuring a processed size of the workpiece (W) in the infeed step at a prescribed time with use of the sizing device (10) that is activated only for a sub-measurement time (t₁a, t₁s), an infeed position of the feed device (3) at the prescribed time, and a grinding condition for the infeed step, and
in a final infeed step, feed of the feed device (3) ends when a measured value measured by the sizing device (10) that is activated only for a final measurement time (t₁b) reaches a desired value, and
wherein the grinding machine (1) measures the size of the workpiece (W) by the measuring method according to claim 5.

8. A grinding machine (1) comprising:
a grinding wheel (7);
a feed device (3) that feeds the grinding wheel (7) relative to a workpiece (W) so that the grinding wheel (7) cuts into the workpiece (W);
a sizing device (10) that measures a size of the workpiece (W); and
a controller (30) that warms up the sizing device (10) for a prescribed warm-up time (t_{D}), and then repeatedly executes a grinding process having a prescribed grinding process time and including a plurality of infeed steps that vary in a feed speed at which the grinding wheel (7) is fed relative to the workpiece (W),
wherein the controller (30) controls the feed device (3) and the sizing device (10) so that
in the grinding process, each of the infeed steps ends at an infeed position that is computed based on a measured value obtained by measuring a processed size of the workpiece (W) in the infeed step at a prescribed time with use of the sizing device (10) that is activated only for a sub-measurement time (t₁a, t₁s), an infeed position of the feed device (3) at the prescribed time, and a grinding condition for the infeed step, and
in a final infeed step, feed of the feed device (3) ends when a measured value measured by the sizing device (10) that is activated only for a final measurement time (t₁b) reaches a desired value, and
wherein the grinding machine (1) measures the size of the workpiece (W) by the measuring method according to claim 6.

## Patentansprüche

1. Messverfahren, wobei:
in einem Hauptprozess, der mit einer Zeitdauer einer Prozesszeit t₀ wiederholt wird, die eine vorgeschriebene Länge hat, durch eine Messvorrichtung eine physikalische Größe gemessen wird,
die Messvorrichtung in dem Hauptprozess nur für eine Messzeit t₁, die kürzer als die Prozesszeit t₀ ist, aktiviert wird, um die physikalische Größe zu messen, und während einer deaktivierten Zeit t₂ deaktiviert wird,
ein Zusammenhang zwischen t₀, t₁, t₂ durch die Formel t₀ = t₁ + t₂ ausgedrückt wird,
eine zeitliche Abweichung bei einem Messwert der von der Messvorrichtung gemessenen physikalischen Größe eine Drift ist, eine zeitliche Abweichung bei dem Messwert nach Aktivierung der Messvorrichtung eine Aktivierungsdrift ist und eine zeitliche Abweichung bei dem Messwert nach Deaktivierung der Messvorrichtung eine Deaktivierungsdrift ist,
das Messverfahren ausgeführt wird, indem
eine Kurve a, die eine Aktivierungsdriftkennlinie der Messvorrichtung angibt,
eine Kurve b, die eine Deaktivierungsdriftkennlinie der Messvorrichtung angibt, und
ein vorgeschriebener zulässiger Messfehler (E) verwendet wird, und
das Messverfahren
einen Schritt, in dem aus der Kurve a ein Abschnitt bestimmt wird, in dem die Aktivierungsdrift in einem Bereich der Messzeit t₁ kleiner oder gleich dem zulässigen Messfehler (E) ist,
einen Schritt, in dem aus der Kurve b ein Abschnitt bestimmt wird, in dem die Deaktivierungsdrift innerhalb eines Bereichs der deaktivierten Zeit t₂ kleiner oder gleich dem zulässigen Messfehler (E) ist, und
einen Schritt umfasst, in dem eine Aufwärmzeit (t_{D}) von der Aktivierung der Messvorrichtung bis zum Beginn der Messung so angepasst wird, dass die Prozesszeit t₀, die durch t₁ + t₂ ausgedrückt wird, gleich einem vorgeschriebenen Wert wird.

2. Messverfahren, wobei:
in einem Hauptprozess, der mit einer Zeitdauer einer Prozesszeit t₀ wiederholt wird, die eine vorgeschriebene Länge hat, durch eine Messvorrichtung eine physikalische Größe gemessen wird,
die Messvorrichtung in dem Hauptprozess nur für eine Messzeit t₁, die kürzer als die Prozesszeit t₀ ist, aktiviert wird, um die physikalische Größe zu messen, und während einer deaktivierten Zeit t₂ deaktiviert wird,
ein Zusammenhang zwischen t₀, t₁, t₂ durch die Formel t₀ = t₁ + t₂ ausgedrückt wird,
eine zeitliche Abweichung bei einem Messwert der von der Messvorrichtung gemessenen physikalischen Größe eine Drift ist, eine zeitliche Abweichung bei dem Messwert nach Aktivierung der Messvorrichtung eine Aktivierungsdrift ist und eine zeitliche Abweichung bei dem Messwert nach Deaktivierung der Messvorrichtung eine Deaktivierungsdrift ist,
in dem Messverfahren
mit Hilfe künstlich hergestellter Driftkennlinien, die durch Kombinieren einer Vielzahl von Driftkennlinien, die einer Vielzahl der Hauptprozesse entsprechen, ausgebildet werden, für jeden der Hauptprozesse ein Driftwert vorausgesagt wird, wobei jede der Driftkennlinien dem Hauptprozess einer Zeitdauer entspricht und aus einer Kombination einer Kurve a, die eine Aktivierungsdriftkennlinie der Messvorrichtung angibt, und einer Kurve b, die eine Deaktivierungsdriftkennlinie der Messvorrichtung angibt, ausgebildet ist, und
ein tatsächlich gemessener Wert durch einen Korrekturwert korrigiert wird, der der vorausgesagte Driftwert ist.

3. Messverfahren nach Anspruch 1, wobei:
die Messvorrichtung in dem Hauptprozess nur für eine Vielzahl von Teilmesszeiten (t₁a, t₁s, t₁b) aktiviert wird; und
die Messzeit t₁ eine Summe der Vielzahl der Teilmesszeiten (t₁a, t₁s, t₁b) ist.

4. Messverfahren nach Anspruch 2, wobei:
die Messvorrichtung in dem Hauptprozess nur für eine Vielzahl von Teilmesszeiten (t₁a, t₁s, t₁b) aktiviert wird; und
die Messzeit t₁ eine Summe der Vielzahl der Teilmesszeiten (t₁a, t₁s, t₁b) ist.

5. Messverfahren nach Anspruch 3, wobei:
der Hauptprozess ein Schleifprozess ist;
die Messvorrichtung eine Größenbestimmungsvorrichtung (10) ist; und
die physikalische Größe eine Größe eines Werkstücks (W) ist.

6. Messverfahren nach Anspruch 4, wobei:
der Hauptprozess ein Schleifprozess ist;
die Messvorrichtung eine Größenbestimmungsvorrichtung (10) ist; und
die physikalische Größe eine Größe eines Werkstücks (W) ist.

7. Schleifmaschine (1) mit:
einer Schleifscheibe (7);
einer Vorschubvorrichtung (3), die die Schleifscheibe (7) bezüglich eines Werkstücks (W) vorschiebt, sodass die Schleifscheibe (7) in das Werkstück (W) schneidet;
einer Größenbestimmungsvorrichtung (10), die eine Größe des Werkstücks (W) misst; und
einer Steuerung (30), die die Größenbestimmungsvorrichtung (10) für eine vorgeschriebene Aufwärmzeit (t_{D}) aufwärmt und dann wiederholt einen Schleifprozess ausführt, der eine vorgeschriebene Schleifprozesszeit hat und der eine Vielzahl von Vorschubschritten umfasst, die hinsichtlich einer Vorschubgeschwindigkeit variieren, mit der die Schleifscheibe (7) bezüglich des Werkstücks (W) vorgeschoben wird,
wobei die Steuerung (30) die Vorschubvorrichtung (3) und die Größenbestimmungsvorrichtung (10) so steuert, dass
in dem Schleifprozess jeder der Vorschubschritte an einer Vorschubposition endet, die beruhend auf einem Messwert, der ermittelt wird, indem in dem Vorschubschritt zu einer vorgeschriebenen Zeit mit Hilfe der Größenbestimmungsvorrichtung (10), die nur für eine Teilmesszeit (t₁a, t₁s) aktiviert wird, eine bearbeitete Größe des Werkstücks (W) gemessen wird, einer Vorschubposition der Vorschubvorrichtung (3) zu der vorgeschriebenen Zeit und einer Schleifbedingung für den Vorschubschritt berechnet wird und
in einem abschließenden Vorschubschritt der Vorschub der Vorschubvorrichtung (3) endet, wenn ein Messwert, der durch die Größenbestimmungsvorrichtung (10) gemessen wird, die nur für eine Endmesszeit (t₁b) aktiviert wird, einen gewünschten Wert erreicht, und
wobei die Schleifmaschine (1) die Größe des Werkstücks (W) durch das Messverfahren gemäß Anspruch 5 misst.

8. Schleifmaschine (1) mit:
einer Schleifscheibe (7);
einer Vorschubvorrichtung (3), die die Schleifscheibe (7) bezüglich eines Werkstücks (W) vorschiebt, sodass die Schleifscheibe (7) in das Werkstück (W) schneidet;
einer Größenbestimmungsvorrichtung (10), die eine Größe des Werkstücks (W) misst; und
einer Steuerung (30), die die Größenbestimmungsvorrichtung (10) für eine vorgeschriebene Aufwärmzeit (t_{D}) aufwärmt und dann wiederholt einen Schleifprozess ausführt, der eine vorgeschriebene Schleifprozesszeit hat und der eine Vielzahl von Vorschubschritten umfasst, die hinsichtlich einer Vorschubgeschwindigkeit variieren, mit der die Schleifscheibe (7) bezüglich des Werkstücks (W) vorgeschoben wird,
wobei die Steuerung (30) die Vorschubvorrichtung (3) und die Größenbestimmungsvorrichtung (10) so steuert, dass
in dem Schleifprozess jeder der Vorschubschritte an einer Vorschubposition endet, die beruhend auf einem Messwert, der ermittelt wird, indem in dem Vorschubschritt zu einer vorgeschriebenen Zeit mit Hilfe der Größenbestimmungsvorrichtung (10), die nur für eine Teilmesszeit (t₁a, t₁s) aktiviert wird, eine bearbeitete Größe des Werkstücks (W) gemessen wird, einer Vorschubposition der Vorschubvorrichtung (3) zu der vorgeschriebenen Zeit und einer Schleifbedingung für den Vorschubschritt berechnet wird und
in einem abschließenden Vorschubschritt der Vorschub der Vorschubvorrichtung (3) endet, wenn ein Messwert, der durch die Größenbestimmungsvorrichtung (10) gemessen wird, die nur für eine Endmesszeit (t₁b) aktiviert wird, einen gewünschten Wert erreicht, und
wobei die Schleifmaschine (1) die Größe des Werkstücks (W) durch das Messverfahren gemäß Anspruch 6 misst.

## Revendications

1. Procédé de mesure, dans lequel :
une quantité physique est mesurée par un dispositif de mesure au cours d'un processus principal qui est répété pendant une période de temps de traitement t₀ présentant une longueur prescrite,
le dispositif de mesure est activé uniquement pendant un temps de mesure t₁ qui est plus court que le temps de traitement t₀ pour mesurer la quantité physique et est désactivé pendant un temps désactivé t₂ au cours du processus principal,
une relation parmi t₀, t₁ et t₂ est exprimée par une formule t₀ = t₁ + t₂,
une variation temporelle dans une valeur mesurée de la quantité physique mesurée par le dispositif de mesure est une dérive, une variation temporelle dans la valeur mesurée après activation du dispositif de mesure est une dérive d'activation, et une variation temporelle dans la valeur mesurée après désactivation du dispositif de mesure est une dérive de réactivation,
le procédé de mesure est exécuté au moyen
d'un graphique a indiquant une caractéristique de dérive d'activation du dispositif de mesure,
d'un graphique b indiquant une caractéristique de dérive de désactivation du dispositif de mesure, et
d'une erreur de mesure admissible prescrite (E), et
le procédé de mesure comporte
une étape de détermination d'une section dans laquelle la dérive d'activation est inférieure ou égale à l'erreur de mesure admissible (E) dans une plage du temps de mesure t₁, à partir du graphique a,
une étape de détermination d'une section dans laquelle la dérive de désactivation est inférieure ou égale à l'erreur de mesure admissible (E) dans une plage du temps de désactivation t₂, à partir du graphique b, et
une étape de réglage d'un temps de mise en route (t_{D}) allant de l'activation du temps de mesure au démarrage de la mesure de sorte que le temps de processus t₀ qui est exprimé par t₁ + t₂ devient égal à une valeur prescrite.

2. Procédé de mesure, dans lequel :
une quantité physique est mesurée par un dispositif de mesure au cours d'un processus principal qui est répété pendant une période de temps de processus t₀ présentant une longueur prescrite,
le dispositif de mesure est activé uniquement pendant un temps de mesure t₁ qui est plus court que le temps de traitement t₀ pour mesurer la quantité physique et est désactivé pendant un temps désactivé t₂ au cours du processus principal,
une relation parmi t₀, t₁ et t₂ est exprimée par une formule t₀ = t₁ + t₂,
une variation temporelle dans une valeur mesurée de la quantité physique mesurée par le dispositif de mesure est une dérive, une variation temporelle dans la valeur mesurée après activation du dispositif de mesure est une dérive d'activation, et une variation temporelle dans la valeur mesurée après désactivation du dispositif de mesure est une dérive de désactivation,
dans le procédé de mesure,
une valeur de dérive pour chacun des processus principaux est prédite au moyen de caractéristiques de dérive synthétisées formées en combinant une pluralité de caractéristiques de dérive correspondant à une pluralité des processus principaux, chacune des caractéristiques de dérive correspondant au processus principal d'une période et étant formée d'une combinaison d'un graphique a indiquant une caractéristique de dérive d'activation du dispositif de mesure et d'un graphique b indiquant une caractéristique de dérive de désactivation du dispositif de mesure, et
une valeur réellement mesurée est corrigée par une valeur de correction qui est la valeur de dérive prédite.

3. Procédé de mesure selon la revendication 1, dans lequel :
le dispositif de mesure est activé uniquement pour une pluralité de sous-temps de mesure (t₁a, t₁s, t₁b) au cours du processus principal ; et
le temps de mesure t₁ est une somme de la pluralité des sous-temps de mesure (t₁a, t₁s, t₁b).

4. Procédé de mesure selon la revendication 2, dans lequel :
le dispositif de mesure est activé uniquement pour une pluralité de sous-temps de mesure (t₁a, t₁s, t₁b) dans le processus principal ; et
le temps de mesure t₁ est une somme de la pluralité des sous-temps de mesure (t₁a, t₁s, t₁b).

5. Procédé de mesure selon la revendication 3, dans lequel :
le processus principal est un processus de rectification ;
le dispositif de mesure est un dispositif de dimensionnement (10) ; et
la quantité physique est une taille d'une pièce (W).

6. Procédé de mesure selon la revendication 4, dans lequel :
le processus principal est un processus de rectification ;
le dispositif de mesure est un dispositif de dimensionnement (10) ; et
la quantité physique est une taille d'une pièce (W).

7. Rectifieuse (1) comprenant :
une meule (7) ;
un dispositif d'amenée (3) qui amène la meule (7) par rapport à une pièce (W) de sorte que la meule (7) effectue une coupe dans la pièce (W) ;
un dispositif de dimensionnement (10) qui mesure une taille de la pièce (W) ; et
un dispositif de commande (30) qui met en route le dispositif de dimensionnement (10) pendant un temps de mise en route (t_{D}) prescrit, puis exécute à plusieurs reprises un processus de rectification présentant un temps de processus de rectification prescrit et comportant une pluralité d'étapes d'amenée qui varient en vitesse d'amenée à laquelle la meule (7) est amenée par rapport à la pièce (W),
dans lequel le dispositif de commande (30) commande le dispositif d'amenée (3) et le dispositif de dimensionnement (10) de sorte que
au cours du processus de rectification, chacune des étapes d'amenée se termine dans une position d'amenée qui est calculée sur la base d'une valeur mesurée obtenue par mesure d'une taille travaillée de la pièce (W) au cours de l'étape d'amenée à un temps prescrit au moyen du dispositif de dimensionnement (10) qui est activé uniquement pendant un sous-temps de mesure (t₁a, t₁s), une position d'amenée du dispositif d'amenée (3) au temps prescrit, et une condition de rectification pour l'étape d'amenée, et
à une étape d'amenée finale, l'amenée du dispositif d'amenée (3) se termine lorsqu'une valeur mesurée mesurée par le dispositif de dimensionnement (10) qui est activé uniquement pendant un temps de mesure final (t₁b) atteint une valeur souhaitée, et
dans lequel la machine de rectification (1) mesure la taille de la pièce (W) par le procédé de mesure selon la revendication 5.

8. Rectifieuse (1) comprenant :
une meule (7) ;
un dispositif d'amenée (3) qui amène la meule (7) par rapport à une pièce (W) de sorte que la meule (7) effectue une coupe dans la pièce (W) ;
un dispositif de dimensionnement (10) qui mesure une taille de la pièce (W) ; et
un dispositif de commande (30) qui met en route le dispositif de dimensionnement (10) pendant un temps de mise en route (t_{D}) prescrit, puis exécute à plusieurs reprises un processus de rectification présentant un temps de processus de rectification prescrit et comportant une pluralité d'étapes d'amenée qui varient en vitesse d'amenée à laquelle la meule (7) est amenée par rapport à la pièce (W),
dans lequel le dispositif de commande (30) commande le dispositif d'amenée (3) et le dispositif de dimensionnement (10) de sorte que
au cours du processus de rectification, chacune des étapes d'amenée se termine dans une position d'amenée qui est calculée sur la base d'une valeur mesurée obtenue par mesure d'une taille travaillée de la pièce (W) au cours de l'étape d'amenée à un temps prescrit au moyen du dispositif de dimensionnement (10) qui est activé uniquement pendant un sous-temps de mesure (t₁a, t₁s), une position d'amenée du dispositif d'amenée (3) au temps prescrit, et une condition de rectification pour l'étape d'amenée, et
à une étape d'amenée finale, l'amenée du dispositif d'amenée (3) se termine lorsqu'une valeur mesurée mesurée par le dispositif de dimensionnement (10) qui est activé uniquement pendant un temps de mesure final (t₁b) atteint une valeur souhaitée, et
dans lequel la machine de rectification (1) mesure la taille de la pièce (W) par le procédé de mesure selon la revendication 6.
